# EUROPEAN PATENT APPLICATION

(11) **EP 4 830 815 A1**
(43) Date of publication of application: **28.10.2026**
(21) Application number: 25793772.2
(22) Date of filing: 15.04.2025
(51) Int. Cl.: B01D 53/62, B01D 53/14, B01D 53/18, B01D 53/78, B01D 53/96, C01B 32/50

(54) **CARBON DIOXIDE RECOVERY SYSTEM AND METHOD FOR OPERATING CARBON DIOXIDE RECOVERY SYSTEM**

(30) Priority: 23.04.2024 JP 2024069413
(71) Applicant: MITSUBISHI HEAVY INDUSTRIES, LTD., Chiyoda-ku Tokyo 100-8332 (JP)
(72) Inventor: TAKETOMO, Takahiro, Tokyo 100-8332 (JP); KAJIKAWA, Kazuhiko, Tokyo 100-8332 (JP)
(74) Representative: Studio Torta S.p.A.
(86) International application number: PCT/JP2025/014750
(87) International publication number: WO 2025/225447

(57) **Abstract**

Provided is a carbon dioxide recovery system capable of reducing a possibility of occurrence of a phenomenon in which an absorbing solution flowing to a stripping tower is not sufficiently heated or increased in temperature when a circulation amount of the absorbing solution increases. A heat exchanger (30) and a storage device (40) are included, the storage device being configured to extract from the stripping tower (20) the absorbing solution from which at least part of the carbon dioxide has been stripped, store the absorbing solution extracted while heating the absorbing solution extracted to a temperature higher than a temperature of the absorbing solution flowing from the absorption tower (10) to the stripping tower (20), and supply the absorbing solution stored to the heat exchanger (30) without passing through the stripping tower (20).

## Description

### Technical Field

The present disclosure relates to a carbon dioxide recovery system and an operation method for a carbon dioxide recovery system.

### Background Art

Plants such as a thermal power plant and a boiler facility use, for example, inexpensive coals as fuels, and emission of carbon dioxide (CO2) contained in an exhaust gas has become a problem. With a trend of decarbonization, the plants are increasingly equipped with a system (a carbon dioxide recovery system) for reducing a discharge amount of CO2 as well as recovering generated CO2.

For example, the carbon dioxide recovery system brings an exhaust gas into contact with an amine-based absorbing solution in an absorption tower, absorbs CO2 into the absorbing solution, and generates a rich solution (an absorbing solution having a relatively high CO2 content). The carbon dioxide recovery system supplies the generated rich solution to a stripping tower, and heats the rich solution in the stripping tower to cause the CO2 contained in the rich solution to be released, thereby generating a lean solution (an absorbing solution having a relatively low CO2 content). The carbon dioxide recovery system circulates the absorbing solution, including supplying the lean solution to the absorption tower. At this time, the rich solution supplied from the absorption tower to the stripping tower is heated to be increased in temperature by the lean solution returned from the stripping tower to the absorption tower in a heat exchanger provided at the carbon dioxide recovery system, thereby facilitating the stripping of carbon dioxide in the stripping tower.

A related technique is disclosed in Patent Document 1.

### Citation List

### Patent Literature

Patent Document 1: JP 2016-187796 A

### Summary of Invention

### Technical Problem

In a case where a variation in a discharge amount of an exhaust gas is small, the circulation amount of the absorbing solution between the absorption tower and the stripping tower is substantially constant, which is no problem. In contrast, for example, in a case where a plant load increases and the discharge amount of the exhaust gas increases, CO2 cannot be sufficiently absorbed in the absorption tower or CO2 cannot be sufficiently stripped in the stripping tower while the circulation amount of the absorbing solution is maintained, and thus the circulation amount of the absorbing solution needs to be increased. However, when the circulation amount of the absorbing solution rapidly increases, a phenomenon in which the absorbing solution supplied to the stripping tower is not sufficiently heated or increased in temperature in the heat exchanger may occur. If such a phenomenon occurs, there is a possibility that CO2 cannot be sufficiently stripped in the stripping tower, and further, the absorbing solution cannot sufficiently absorb CO2 in the absorption tower.

The present disclosure has been made in view of such circumstances, and an object thereof is to provide a carbon dioxide recovery system and an operation method for a carbon dioxide recovery system capable of reducing a possibility of occurrence of a phenomenon in which an absorbing solution flowing to a stripping tower is not sufficiently heated or increased in temperature in a case where a circulation amount of the absorbing solution increases.

### Solution to Problem

To solve the above problems, the carbon dioxide recovery system and the operation method for a carbon dioxide recovery system employ the following means.

A carbon dioxide recovery system according to one aspect of the present disclosure includes: a heat exchanger configured to heat an absorbing solution flowing from an absorption tower to a stripping tower by using the absorbing solution flowing from the stripping tower to the absorption tower, the absorption tower being configured to absorb carbon dioxide contained in a gas to be processed into the absorbing solution, the stripping tower being configured to strip the carbon dioxide from the absorbing solution; and a storage device configured to extract from the stripping tower the absorbing solution from which at least part of the carbon dioxide has been stripped, store the absorbing solution extracted while heating the absorbing solution extracted to a temperature higher than a temperature of the absorbing solution flowing from the absorption tower to the stripping tower, and supply the absorbing solution stored to the heat exchanger without passing through the stripping tower.

An operation method for a carbon dioxide recovery system according to one aspect of the present disclosure is an operation method for a carbon dioxide recovery system including a heat exchanger configured to heat an absorbing solution flowing from an absorption tower to a stripping tower by using the absorbing solution flowing from the stripping tower to the absorption tower, the absorption tower being configured to absorb carbon dioxide contained in a gas to be processed into the absorbing solution, the stripping tower being configured to strip the carbon dioxide from the absorbing solution. The operation method includes extracting from the stripping tower the absorbing solution from which at least part of the carbon dioxide has been stripped, storing the absorbing solution extracted while heating the absorbing solution extracted to a temperature higher than a temperature of the absorbing solution flowing from the absorption tower to the stripping tower, and supplying the absorbing solution stored to the heat exchanger without passing through the stripping tower.

### Advantageous Effects of Invention

According to the present disclosure, it is possible to reduce a possibility of occurrence of a phenomenon in which the absorbing solution supplied to the stripping tower is not sufficiently heated or increased in temperature when a circulation amount of the absorbing solution increases.

### Brief Description of Drawings

FIG. 1 is a schematic configuration diagram of a carbon dioxide recovery system according to a first embodiment of the present disclosure.
FIG. 2 is a schematic configuration diagram of a carbon dioxide recovery system according to a modification of the first embodiment of the present disclosure.

### Description of Embodiments

Hereinafter, a carbon dioxide recovery system and an operation method for a carbon dioxide recovery system according to an embodiment of the present disclosure will be described with reference to the drawings.

### Overall Configuration

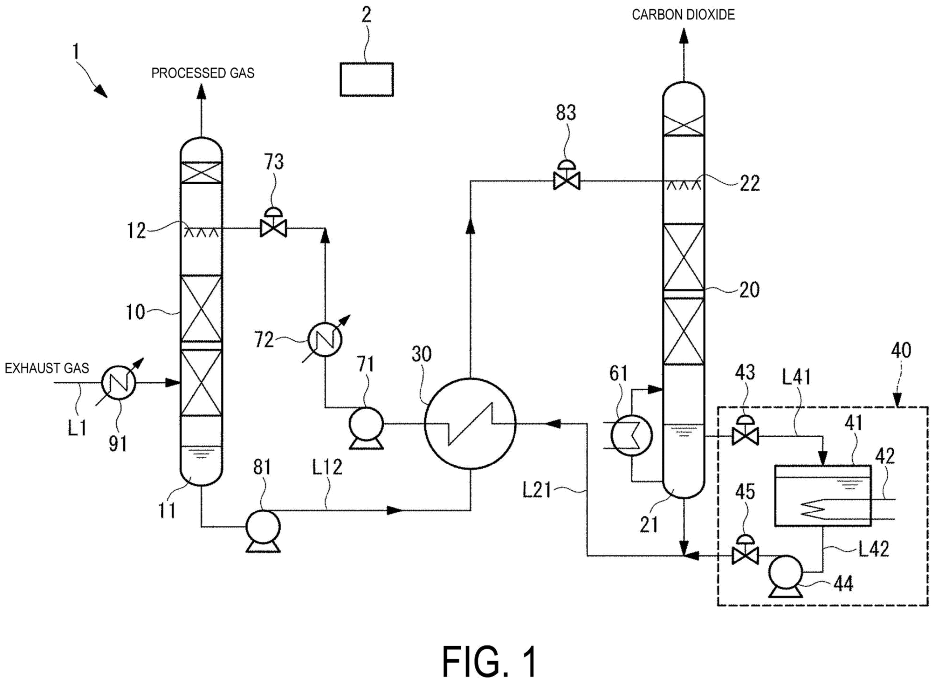

As illustrated in FIG. 1, a carbon dioxide recovery system 1 includes an absorption tower 10, a stripping tower 20, a heat exchanger 30, a storage device 40, and lines connecting these facilities.

The absorption tower 10 is a facility that chemically absorbs carbon dioxide contained in an exhaust gas (gas to be processed) into an amine-based absorbing solution (hereinafter referred to as "absorbing solution").

A lower portion and a bottom portion of the absorption tower 10 is a rich solution tank unit 11 in which a rich solution (an absorbing solution having absorbed carbon dioxide) is stored.

An exhaust gas discharge line L1 is connected to the lower portion of the absorption tower 10 above the rich solution tank unit 11.

The exhaust gas discharge line L1 is a line that supplies an exhaust gas discharged from a plant such as a thermal power plant or a boiler facility to the absorption tower 10.

An exhaust gas cooler 91 is provided in the middle of the exhaust gas discharge line L1.

The exhaust gas cooler 91 is a device that lowers the temperature of the exhaust gas flowing through the exhaust gas discharge line L1 to a temperature optimal for chemical absorption performed in the absorption tower 10.

Examples of a cooling medium include in-plant cooling water used in various places in the plant.

The stripping tower 20 is a facility that causes carbon dioxide to be released from the rich solution.

A lower portion and a bottom portion of the stripping tower 20 is a lean solution tank unit 21 in which a lean solution (an absorbing solution from which carbon dioxide has been released) is stored. The lean solution is an absorbing solution having a relatively lower carbon dioxide content than the rich solution. In other words, the rich solution is an absorbing solution having a relatively higher carbon dioxide content than the lean solution.

The rich solution tank unit 11 of the absorption tower 10 and an upper portion of the stripping tower 20 are connected by a rich solution line (forward line) L12, and configured such that the rich solution stored in the rich solution tank unit 11 is supplied to the stripping tower 20.

A rich solution supply unit 22 is connected to an end portion of the rich solution line L12.

The rich solution supply unit 22 is a portion that injects the rich solution supplied from the absorption tower 10 into the stripping tower 20, and is provided at an upper portion in the stripping tower 20.

The rich solution injected from the rich solution supply unit 22 descends inside the stripping tower 20, and is heated by steam generated by a reboiler 61 (to be described below) in the process of descending, thereby releasing at least part of the carbon dioxide.

A rich solution pump 81 and a rich solution valve 83 are provided in the middle of the rich solution line L12.

The rich solution pump 81 is a pump for feeding the rich solution stored in the rich solution tank unit 11 to the stripping tower 20. The rich solution pump 81 is provided at a position of the rich solution line L12 located upstream of the heat exchanger 30.

The rich solution valve 83 is a valve for changing the flow rate of the rich solution supplied to the stripping tower 20 (rich solution supply unit 22). The rich solution valve 83 is provided at a position of the rich solution line L12 located downstream of the heat exchanger 30.

The rotational speed of the rich solution pump 81 and the opening degree of the rich solution valve 83 are determined and adjusted by a control unit 2. The flow rate of the rich solution supplied to the stripping tower 20 (rich solution supply unit 22) may be changed by changing the rotational speed of the rich solution pump 81. In that case, the rich solution valve 83 can be omitted, or the opening degree of the rich solution valve 83 does not need to be adjusted (for example, always fully opened).

The control unit 2 includes, for example, a central processing unit (CPU), a random access memory (RAM), a read only memory (ROM), and a computer-readable storage medium. A series of processes for implementing various functions are stored in a storage medium or the like in the form of a program, for example, and the CPU reads this program into the RAM or the like and executes information processing/arithmetic processing, thereby implementing the various functions.

A form in which the program is installed in advance in the ROM or another storage medium, a form in which the program is provided in a state of being stored in a computer-readable storage medium, a form in which the program is distributed via a wired or wireless communication means, or the like may be applied. The computer-readable storage medium includes a magnetic disk, a magneto-optical disk, a CD-ROM, a DVD-ROM, a semiconductor memory, and the like.

The lean solution tank unit 21 of the stripping tower 20 and an upper portion of the absorption tower 10 are connected by a lean solution line (return line) L21, and configured such that the lean solution stored in the lean solution tank unit 21 is supplied to the absorption tower 10.

A lean solution supply unit 12 is connected to an end portion of the lean solution line L21.

The lean solution supply unit 12 is a portion that injects the lean solution supplied from the stripping tower 20 into the absorption tower 10, and is provided at an upper portion inside the absorption tower 10.

The lean solution injected from the lean solution supply unit 12 descends inside the absorption tower 10 and absorbs carbon dioxide by contacting the exhaust gas supplied from the exhaust gas discharge line L1 in the process of descending.

A lean solution pump 71, a lean solution cooler 72, and a lean solution valve 73 are provided in the middle of the lean solution line L21.

The lean solution pump 71 is a pump for feeding the lean solution stored in the lean solution tank unit 21 to the absorption tower 10. The lean solution pump 71 is provided at a position of the lean solution line L21 located downstream of the heat exchanger 30.

The lean solution cooler 72 is a device that lowers the temperature of the lean solution flowing through the lean solution line L21 to a temperature optimal for the chemical absorption performed in the absorption tower 10. Examples of a cooling medium include in-plant cooling water. The lean solution cooler 72 is provided at a position of the lean solution line L21 located downstream of the lean solution pump 71.

The lean solution valve 73 is a valve for changing the flow rate of the lean solution supplied to the absorption tower 10 (lean solution supply unit 12). The lean solution valve 73 is provided at a position of the lean solution line L21 located downstream of the lean solution cooler 72.

The rotational speed of the lean solution pump 71 and the opening degree of the lean solution valve 73 are determined and adjusted by the control unit 2.

The flow rate of the lean solution supplied to the absorption tower 10 (lean solution supply unit 12) may be changed by changing the rotational speed of the lean solution pump 71. In that case, the lean solution valve 73 can be omitted, or the opening degree of the lean solution valve 73 does not need to be adjusted (for example, always fully opened).

The heat exchanger 30 is provided in the middle of the rich solution line L12 and the lean solution line L21.

The heat exchanger 30 is a device that heats the rich solution flowing through the rich solution line L12 (the absorbing solution flowing from the absorption tower 10 toward the stripping tower 20) by using the lean solution flowing through the lean solution line L21 (the absorbing solution flowing from the stripping tower 20 to the absorption tower 10) as a heat source.

By heating the rich solution in the heat exchanger 30, the temperature of the rich solution is raised to a temperature close to an optimum temperature for the stripping of carbon dioxide performed in the stripping tower 20, whereby the stripping of carbon dioxide in the stripping tower 20 can be facilitated.

On the other hand, by cooling the lean solution in the heat exchanger 30, the temperature of the lean solution is lowered to a temperature close to an optimum temperature for the chemical absorption of carbon dioxide performed in the absorption tower 10, whereby the chemical absorption of carbon dioxide in the absorption tower 10 can be facilitated. Since there is a possibility that the lean solution cannot be sufficiently cooled only by the heat exchanger 30, the lean solution cooler 72 is provided at the position of the lean solution line L21 located downstream of the heat exchanger 30.

The storage device 40 is provided at a lower portion of the stripping tower 20.

The storage device 40 is a device that extracts the lean solution from the stripping tower 20, stores the extracted lean solution while heating the lean solution to a predetermined temperature or higher, and in a predetermined case, supplies the stored lean solution to the heat exchanger 30 to be described below without passing through the stripping tower 20.

Details of the storage device 40 will be described below.

The reboiler 61 is provided at a lower portion of the stripping tower 20.

The reboiler 61 is a device independent of the storage device 40, and the function thereof is different from that of the storage device 40.

The reboiler 61 is a device that generates steam by heating part of the lean solution stored in the lean solution tank unit 21 of the stripping tower 20 to raise the temperature thereof using steam or the like supplied from an external facility (e.g., a plant such as a thermal power plant or a boiler facility) as a heat source, and supplies the temperature-raised lean solution and the generated steam to the stripping tower 20. The steam supplied to the stripping tower 20 is used to heat the rich solution, and the rich solution releases at least part of the carbon dioxide by being heated.

### Configuration of Storage Device

The storage device 40 is a device that extracts the lean solution from the stripping tower 20, stores the extracted lean solution while heating the extracted lean solution to a predetermined temperature or higher, and in a predetermined case, supplies the stored lean solution to the heat exchanger 30 without passing through the stripping tower 20.

The storage device 40 includes a buffer tank 41, an extraction valve 43, a supply pump 44, a supply valve 45, an extraction line L41, and a supply line L42.

The buffer tank 41 is a tank (container) that stores the lean solution extracted from the stripping tower 20.

The buffer tank 41 is connected to the lean solution tank unit 21 of the stripping tower 20 via the extraction line L41. This makes it possible to extract the lean solution from the lean solution tank unit 21 and supply the extracted lean solution to the buffer tank 41.

The buffer tank 41 is connected to the lean solution line L21 (a position of the lean solution line L21 located upstream of the heat exchanger 30) via the supply line L42. That is, the buffer tank 41 is connected to the heat exchanger 30 via the supply line L42 and the lean solution line L21. This makes it possible to supply the lean solution stored in the buffer tank 41 to the heat exchanger 30.

The supply line L42 directly connects the buffer tank 41 and the lean solution line L21, and does not pass through the lean solution tank unit 21 of the stripping tower 20.

The buffer tank 41 is provided with a heater 42.

The heater 42 is configured to heat the lean solution stored in the buffer tank 41. This will cause the lean solution to be stored at a temperature equal to or higher than the predetermined temperature. Examples of the heater 42 include an electric heater and a heater using steam as a heat source.

The predetermined temperature is a temperature at which the rich solution can be sufficiently heated at least in the heat exchanger 30, and is, for example, a temperature higher than the temperature of the absorbing solution flowing from the absorption tower 10 to the stripping tower 20, a temperature higher than the temperature of the absorbing solution flowing from the stripping tower 20 to the heat exchanger 30, or a temperature higher than the temperature of the absorbing solution stored in the lean solution tank unit 21 of the stripping tower 20. However, from the viewpoint of sufficiently and efficiently heating the rich solution in the heat exchanger 30, the predetermined temperature is preferably a temperature higher than the temperature of the absorbing solution flowing from the stripping tower 20 to the heat exchanger 30 or a temperature higher than the temperature of the absorbing solution stored in the lean solution tank unit 21 of the stripping tower 20.

The output of the heater 42 is determined and adjusted by the control unit 2. The control unit 2 adjusts the output of the heater 42 so as to maintain the temperature of the lean solution at the predetermined temperature while acquiring the temperature of the lean solution stored in the buffer tank 41 by a temperature sensor (not illustrated), for example.

The extraction valve 43 is provided in the middle of the extraction line L41.

The extraction valve 43 is a valve for changing the flow rate of the lean solution supplied from the lean solution tank unit 21 of the stripping tower 20 to the buffer tank 41. The opening degree of the extraction valve 43 is determined and adjusted by the control unit 2. The control unit 2 adjusts the opening degree of the extraction valve 43 so as to maintain the liquid level of the lean solution stored in the lean solution tank unit 21 of the stripping tower 20 within a predetermined range while acquiring the liquid level with a level meter (not illustrated), for example.

A pump for feeding the lean solution from the lean solution tank unit 21 of the stripping tower 20 to the buffer tank 41 may be provided in the middle of the extraction line L41. The rotational speed of this pump is determined and adjusted by the control unit 2 on the basis of at least one of the liquid level of the lean solution and the opening degree of the extraction valve 43. However, by installing the buffer tank 41 below the lean solution tank unit 21 of the stripping tower 20, the lean solution can be fed without providing the pump.

The supply pump 44 and the supply valve 45 are provided in the middle of the supply line L42.

The supply pump 44 is a pump for feeding the lean solution stored in the buffer tank 41 to the lean solution line L21 and further to the heat exchanger 30.

The supply valve 45 is a valve for changing the flow rate of the lean solution supplied to the lean solution line L21 (heat exchanger 30). The supply valve 45 is provided at a position of the supply line L42 located downstream of the supply pump 44.

The rotational speed of the supply pump 44 and the opening degree of the supply valve 45 are determined and adjusted by the control unit 2 on the basis of, for example, the circulation amount of the absorbing solution according to a plant load (i.e., the discharge amount of the exhaust gas).

The flow rate of the lean solution supplied to the lean solution line L21 (heat exchanger 30) may be changed by changing the rotational speed of the supply pump 44. In that case, the supply valve 45 can be omitted, or the opening degree of the supply valve 45 does not need to be adjusted (for example, always fully opened).

### Operation of Carbon Dioxide Recovery System

In the carbon dioxide recovery system 1 configured as described above, the absorbing solution circulates between the absorption tower 10 and the stripping tower 20. The circulation flow of the absorbing solution is formed by, for example, the lean solution pump 71 and the rich solution pump 81. Therefore, the circulation amount of the absorbing solution is adjusted by the rotational speed of the lean solution pump 71 and the rotational speed of the rich solution pump 81.

The rich solution stored in the rich solution tank unit 11 of the absorption tower 10 is guided to the stripping tower 20 via the rich solution line L12. At this time, the rich solution is heated to be increased in temperature by the lean solution (the absorbing solution flowing from the stripping tower 20 to the absorption tower 10) when passing through the heat exchanger 30 provided at the rich solution line L12. When the temperature of the rich solution increases, the stripping of carbon dioxide in the stripping tower 20 is facilitated.

The rich solution guided to the stripping tower 20 is injected into the stripping tower 20 from the rich solution supply unit 22.

The injected rich solution descends inside the stripping tower 20, and is heated by steam generated by the reboiler 61 and ascending inside the stripping tower 20 in the process of descending, thereby releasing at least part of the carbon dioxide, and then is stored as the lean solution in the lean solution tank unit 21 located at the lower portion and the bottom portion of the stripping tower 20.

The released carbon dioxide is extracted from a top portion of the stripping tower 20, subjected to a predetermined processing in a facility (not illustrated), and then stored in a facility (not illustrated) or used in a facility (not illustrated).

The lean solution stored in the lean solution tank unit 21 is guided to the absorption tower 10 via the lean solution line L21. At this time, the lean solution is cooled to be decreased in temperature by the rich solution (the absorbing solution flowing from the absorption tower 10 to the stripping tower 20) when passing through the heat exchanger 30 provided at the lean solution line L21. Further, the lean solution is further cooled to be decreased in temperature by passing through the lean solution cooler 72. When the temperature of the lean solution decreases, the chemical absorption of carbon dioxide in the absorption tower 10 is facilitated.

The lean solution guided to the absorption tower 10 is injected into the absorption tower 10 from the lean solution supply unit 12.

The injected lean solution descends inside the absorption tower 10, chemically absorbs carbon dioxide by contacting an exhaust gas which is guided into the absorption tower 10 via the exhaust gas discharge line L1 and ascends inside the absorption tower 10 in the process of descending, and then is stored as the rich solution in the rich solution tank unit 11 located at the lower portion and the bottom portion of the absorption tower 10.

The exhaust gas (processed gas) from which the carbon dioxide has been removed is extracted from the top portion of the stripping tower 20.

By repeating this, the exhaust gas discharged from the plant such as a thermal plant or a boiler facility is continuously processed.

However, there may be a case where the plant load rapidly increases and the discharge amount of the exhaust gas rapidly increases. In this case, carbon dioxide cannot be sufficiently chemically absorbed in the absorption tower 10, or carbon dioxide cannot be sufficiently stripped in the stripping tower 20 while the circulation amount of the absorbing solution is maintained, and thus the circulation amount of the absorbing solution needs to be increased. The circulation amount of the absorbing solution is adjusted by the rotational speed of the lean solution pump 71 and the rotational speed of the rich solution pump 81. The rotational speed of the lean solution pump 71 and the rotational speed of the rich solution pump 81 are determined and adjusted by the control unit 2 in accordance with, for example, a plant load (i.e., the discharge amount of the exhaust gas).

When the circulation amount of the absorbing solution rapidly increases, a phenomenon in which the absorbing solution flowing to the stripping tower 20 is not sufficiently heated or increased in temperature in the heat exchanger 30 may occur.

Therefore, the carbon dioxide recovery system 1 according to the present embodiment includes the storage device 40.

The buffer tank 41 of the storage device 40 always stores the lean solution at a predetermined temperature or higher.

When the circulation amount of the absorbing solution circulating between the absorption tower 10 and the stripping tower 20 is constant, the supply pump 44 is stopped and the supply valve 45 is closed, so that the high-temperature lean solution stored in the buffer tank 41 is not supplied to the lean solution line L21.

On the other hand, when the circulation amount of the absorbing solution circulating between the absorption tower 10 and the stripping tower 20 increases, the supply valve 45 is opened and the supply pump 44 is operated, so that the high-temperature lean solution stored in the buffer tank 41 is supplied to the heat exchanger 30 via the lean solution line L21. This makes it possible to sufficiently and quickly heat the absorbing solution flowing to the stripping tower 20.

### Effects of Embodiments

According to the carbon dioxide recovery system 1 according to the present embodiment, the following effects are obtained.

With the storage device 40 that extracts from the stripping tower 20 the absorbing solution from which at least part of the carbon dioxide has been stripped, stores the absorbing solution extracted while heating the absorbing solution extracted to a temperature higher than the temperature of the absorbing solution flowing from the absorption tower 10 toward the stripping tower 20, and supplies the absorbing solution stored to the heat exchanger 30 without passing through the stripping tower 20, for example, when the circulation amount of the absorbing solution is increased with an increase in a discharge amount of an exhaust gas due to an increase in a plant load, the absorbing solution flowing to the stripping tower 20 can be heated sufficiently and quickly by supplying the stored high-temperature absorbing solution to the heat exchanger 30. This makes it possible to reduce a possibility of occurrence of a phenomenon in which the absorbing solution is not sufficiently heated or increased in temperature when the circulation amount of the absorbing solution increases.

Since the storage device 40 includes the buffer tank 41 that stores the absorbing solution, the extraction line L41 that guides the absorbing solution from the stripping tower 20 to the buffer tank 41, the supply line L42 that guides the absorbing solution from the buffer tank 41 to the heat exchanger 30, and the heater 42 that heats the absorbing solution stored in the buffer tank 41, it is possible to extract from the stripping tower 20 part of the absorbing solution from which at least part of the carbon dioxide has been stripped, store the absorbing solution extracted at a temperature higher than the temperature of the absorbing solution flowing from the absorption tower 10 to the stripping tower 20, and supply the absorbing solution stored to the heat exchanger 30 without passing through the stripping tower 20.

Since the control unit 2 determines the opening degree of the extraction valve 43 on the basis of the liquid level of the absorbing solution stored in the lower portion of the stripping tower 20, the amount of the absorbing solution guided to the buffer tank 41 can be changed in accordance with a change in the liquid level, so that the liquid level of the absorbing solution stored in the lower portion of the stripping tower 20 can be easily controlled.

Since the storage device 40 includes the supply pump 44 provided at the supply line L42, the absorbing solution can be efficiently supplied from the buffer tank 41.

Since the control unit 2 determines the rotational speed of the supply pump 44 in accordance with a discharge amount of an exhaust gas, it is possible to cause the flow rate of the high-temperature absorbing solution stored in the tank to quickly follow an increase in the circulation amount of the absorbing solution according to an increase in the discharge amount of the gas to be processed.

Since the control unit 2 determines at least one of the rotational speed of the supply pump 44 and the opening degree of the supply valve 45 in accordance with a discharge amount of an exhaust gas, it is possible to cause the supply amount of the high-temperature absorbing solution stored in the buffer tank 41 to quickly follow an increase in the circulation amount of the absorbing solution according to an increase in a discharge amount of an exhaust gas.

### Modification 1

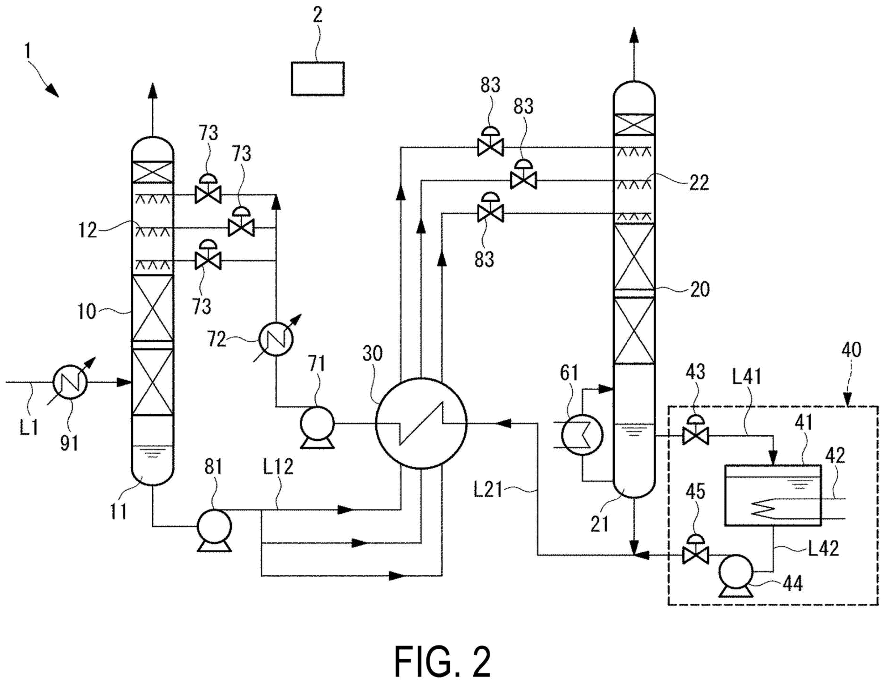

As illustrated in FIG. 2, the rich solution line L12 of the carbon dioxide recovery system 1 according to Modification 1 branches at a position downstream of the rich solution pump 81. In the case of FIG. 2, the rich solution line L12 branches into three lines. The rich solution valve 83 is provided in each of the rich solution lines L12 after the branching.

The control unit 2 adjusts the opening degree of each of the rich solution valves 83 in accordance with the total amount of the rich solution flowing through the rich solution lines L12, thereby causing the absorbing solution to flow through not all of the rich solution lines L12, but only some of the rich solution lines L12, when the circulation amount of the absorbing solution is small, or causing the absorbing solution to flow through all of the rich solution lines L12 when the circulation amount of the absorbing solution is large, for example. This makes it possible to suppress a variation in the flow rate of the absorbing solution flowing through each of the rich solution lines L12, and to maintain the speed of the absorbing solution injected from the rich solution supply unit 22 and descending inside the stripping tower 20 within a range optimal for the release of carbon dioxide.

The rich solution line L12 may branch at a position downstream of the heat exchanger 30.

When the rich solution line L12 branches at a position downstream of the rich solution pump 81 and a plurality of rich solution lines L12 pass through the heat exchanger 30, the control unit 2 adjusts the opening degree of each of the rich solution valves 83, thereby causing the absorbing solution to flow through not all of the rich solution lines L12, but only some of the rich solution lines L12, when the circulation amount of the absorbing solution is small, or causing the absorbing solution to flow through all of the rich solution lines L12 when the circulation amount of the absorbing solution is large, for example. This makes it possible to suppress a variation in the flow rate of the absorbing solution flowing through each of the rich solution lines L12 passing through the heat exchanger 30, and to maintain the speed of the absorbing solution flowing through each of the rich solution lines L12 inside the heat exchanger 30 within a speed range optimal for heat exchange.

In order to finely adjust the flow rate of the absorbing solution flowing through each of the rich solution lines L12 passing through the heat exchanger 30, a separate valve may be provided at a position of each of the rich solution lines L12 upstream of the heat exchanger 30. The opening degree of the separate valve is determined and adjusted by the control unit 2.

### Modification 2

The lean solution line L21 of the carbon dioxide recovery system 1 according to Modification 2 branches at a position downstream of the lean solution cooler 72. In the case of FIG. 2, the lean solution line L21 branches into three lines. The lean solution valve 73 is provided at each of the lean solution lines L21 after the branching.

The control unit 2 adjusts the opening degrees of the lean solution valves 73 in accordance with the total amount of the lean solution flowing through the lean solution lines L21, thereby causing the absorbing solution to flow through not all of the lean solution lines L21, but only some of the lean solution lines L21, when the circulation amount of the absorbing solution is small, or causing the absorbing solution to flow through all of the lean solution lines L21 when the circulation amount of the absorbing solution is large, for example. This makes it possible to suppress a variation in the flow rate of the absorbing solution flowing through each of the lean solution lines L21, and to maintain the speed of the absorbing solution injected from the lean solution supply unit 12 and descending inside the absorption tower 10 within a range optimal for the chemical absorption of carbon dioxide.

### Supplementary Notes

The carbon dioxide recovery system 1 and the operation method for the carbon dioxide recovery system 1 according to one embodiment of the present disclosure described above are understood, for example, as follows.

A carbon dioxide recovery system (1) according to a first aspect of the present disclosure includes: a heat exchanger (30) configured to heat an absorbing solution flowing from an absorption tower (10) to a stripping tower (20) by using the absorbing solution flowing from the stripping tower (20) to the absorption tower (10), the absorption tower (10) being configured to absorb carbon dioxide contained in a gas to be processed into the absorbing solution, the stripping tower (20) being configured to strip the carbon dioxide from the absorbing solution; and a storage device (40) configured to extract from the stripping tower (20) the absorbing solution from which at least part of the carbon dioxide has been stripped, store the absorbing solution extracted while heating the absorbing solution extracted to a temperature higher than a temperature of the absorbing solution flowing from the absorption tower (10) to the stripping tower (20), and supply the absorbing solution stored to the heat exchanger (30) without passing through the stripping tower (20).

With the storage device (40) configured to extract from the stripping tower (20) the absorbing solution from which at least part of the carbon dioxide has been stripped, store the absorbing solution extracted while heating the absorbing solution extracted to a temperature higher than the temperature of the absorbing solution flowing from the absorption tower (10) to the stripping tower (20), and supply the absorbing solution stored to the heat exchanger (30) without passing through the stripping tower (20), for example, when the circulation amount of the absorbing solution is increased with an increase in a discharge amount of the gas to be processed due to an increase in a plant load, the absorbing solution flowing to the stripping tower (20) can be heated sufficiently and quickly by supplying the stored high-temperature absorbing solution to the heat exchanger (30). This makes it possible to reduce a possibility of occurrence of a phenomenon in which the absorbing solution is not sufficiently heated or increased in temperature when the circulation amount of the absorbing solution increases.

In the carbon dioxide recovery system (1) of a second aspect according to the first aspect of the present disclosure, the temperature of the absorbing solution stored in the storage device (40) is a temperature higher than a temperature of the absorbing solution flowing from the stripping tower (20) to the heat exchanger (30) or a temperature higher than the temperature of the absorbing solution stored in a bottom portion (21) of the stripping tower (20).

Since the temperature of the absorbing solution stored in the storage device (40) is a temperature higher than the temperature of the absorbing solution flowing from the stripping tower (20) to the heat exchanger (30) or a temperature higher than the temperature of the absorbing solution stored in the bottom portion (21) of the stripping tower (20), the absorbing solution can be sufficiently and efficiently heated in the heat exchanger (30).

In the carbon dioxide recovery system (1) of a third aspect according to the first or second aspects of the present disclosure, the storage device (40) includes a tank (41) configured to store the absorbing solution, an extraction line (L41) configured to guide the absorbing solution from the stripping tower (20) to the tank (41), a supply line (L42) configured to guide the absorbing solution from the tank (41) to the heat exchanger (30), and a heater (42) configured to heat the absorbing solution stored in the tank (41).

Since the storage device (40) includes the tank (41) that stores the absorbing solution, the extraction line (L41) that guides the absorbing solution from the stripping tower (20) to the tank (41), the supply line (L42) that guides the absorbing solution from the tank (41) to the heat exchanger (30), and the heater (42) that heats the absorbing solution stored in the tank (41), it is possible to extract from the stripping tower (20) part of the absorbing solution from which at least part of the carbon dioxide has been stripped, store the absorbing solution extracted at a temperature higher than the temperature of the absorbing solution flowing from the absorption tower (10) to the stripping tower (20), and supply the absorbing solution stored to the heat exchanger (30) without passing through the stripping tower (20).

The carbon dioxide recovery system (1) of a fourth aspect according to the third aspect of the present disclosure includes a control unit (2). The storage device (40) includes a valve (43) provided at the extraction line (L41), and the control unit (2) determines an opening degree of the valve (43) on the basis of a liquid level of the absorbing solution stored in a lower portion of the stripping tower (20).

Since the control unit (2) determines the opening degree of the valve (43) on the basis of the liquid level of the absorbing solution stored in the lower portion of the stripping tower (20), the amount of the absorbing solution guided to the tank (41) can be changed in accordance with a change in the liquid level, so that the liquid level of the absorbing solution stored in the lower portion of the stripping tower (20) can be easily controlled.

In the carbon dioxide recovery system (1) of a fifth aspect according to any one of the second to fourth aspects of the present disclosure, the storage device (40) includes a pump (44) provided at the supply line (L42).

Since the storage device (40) includes the pump (44) provided at the supply line (L42), the absorbing solution can be efficiently supplied from the tank (41).

The carbon dioxide recovery system (1) of a sixth aspect according to the fifth aspect of the present disclosure includes a control unit (2). The control unit (2) determines a rotational speed of the pump (44) in accordance with a discharge amount of the gas to be processed.

Since the control unit (2) determines the rotational speed of the pump (44) in accordance with the discharge amount of the gas to be processed, it is possible to cause a supply amount of the high-temperature absorbing solution stored in the tank (41) to quickly follow an increase in a circulation amount of the absorbing solution according to an increase in the discharge amount of the gas to be processed.

The carbon dioxide recovery system (1) of a seventh aspect according to the fifth aspect of the present disclosure includes a control unit (2). The storage device (40) includes a valve (45) provided at the supply line (L42), and the control unit (2) determines at least one of a rotational speed of the pump (44) and an opening degree of the valve (45) in accordance with a discharge amount of the gas to be processed.

Since the control unit (2) determines at least one of the rotational speed of the pump (44) and the opening degree of the valve (45) in accordance with the discharge amount of the gas to be processed, it is possible to cause the supply amount of the high-temperature absorbing solution stored in the tank (41) to quickly follow an increase in a circulation amount of the absorbing solution in accordance with an increase in the discharge amount of the gas to be processed.

The carbon dioxide recovery system (1) of an eighth aspect according to any one of the first to seventh aspects of the present disclosure includes a control unit (2), a plurality of return lines (L21) configured to guide the absorbing solution to the absorption tower (10), and a valve (73) provided at each of the return lines (L21). The control unit (2) determines an opening degree of each valve (73) in accordance with a total amount of the absorbing solution to be guided to the absorption tower (10).

The plurality of return lines (L21) that guide the absorbing solution to the absorption tower (10) and the valve (73) provided at each of the return lines (L21) are provided, and the control unit (2) determines the opening degree of each valve (73) in accordance with the total amount of the absorbing solution to be guided to the absorption tower (10), and thus it is possible to suppress a variation in a flow rate of the absorbing solution flowing through each of the return lines (L21). For example, the absorbing solution is caused to flow through not all of the return lines (L21), but only some of the return lines (L21), when a circulation amount of the absorbing solution is small, or the absorbing solution is caused to flow through all of the return lines (L21) when the circulation amount of the absorbing solution is large, whereby a variation in the flow rate of the absorbing solution flowing through each of the return lines (L21) can be suppressed. This makes it possible to maintain the speed of the absorbing solution descending inside the absorption tower (10) within a range optimal for the chemical absorption of carbon dioxide.

The carbon dioxide recovery system (1) of a ninth aspect according to any one of the first to eighth aspects of the present disclosure includes a control unit (2), a plurality of forward lines (L12) that guide the absorbing solution to the stripping tower (20), and a valve (83) provided at each of the forward lines (L12). The control unit (2) determines an opening degree of each valve (83) in accordance with a total amount of the absorbing solution to be guided to the stripping tower (20).

The plurality of forward lines (L12) that guide the absorbing solution to the stripping tower (20) and the valve (83) provided at each of the forward lines (L12) are provided, and the control unit (2) determines the opening degree of each valve (83) in accordance with the total amount of the absorbing solution to be guided to the stripping tower (20), and thus it is possible to suppress a variation in a flow rate of the absorbing solution flowing through each of the forward lines (L12). For example, the absorbing solution is caused to flow through not all of the forward lines (L12), but only some of the forward lines (L12), when a circulation amount of the absorbing solution is small, or the absorbing solution is caused to flow through all of the forward lines (L12) when the circulation amount of the absorbing solution is large, whereby a variation in the flow rate of the absorbing solution flowing through each of the forward lines (L12) can be suppressed. This makes it possible to maintain the speed of the absorbing solution descending inside the stripping tower (20) within a range optimal for the release of carbon dioxide.

In the carbon dioxide recovery system (1) of a tenth aspect according to the ninth aspect, the plurality of forward lines (L12) pass through the heat exchanger (30).

Since the plurality of forward lines (L12) pass through the heat exchanger (30), it is possible to suppress a variation in the flow rate of the absorbing solution flowing through each of the forward lines (L12) passing through the heat exchanger (30). For example, the absorbing solution is caused to flow through not all of the forward lines (L12), but only some of the forward lines (L12), when a circulation amount of the absorbing solution is small, or the absorbing solution is caused to flow through all of the forward lines (L12) when the circulation amount of the absorbing solution is large, whereby a variation in the flow rate of the absorbing solution flowing through each of the forward lines (L12) passing through the heat exchanger (30) can be suppressed. This makes it possible to maintain the speed of the absorbing solution flowing through each of the forward lines (L12) inside the heat exchanger (30) within a speed range optimal for heat exchange.

An operation method for a carbon dioxide recovery system (1) according to an eleventh aspect of the present disclosure is an operation method for a carbon dioxide recovery system (1) including a heat exchanger (30) configured to heat an absorbing solution flowing from an absorption tower (10) to a stripping tower (20) by using the absorbing solution flowing from the stripping tower (20) to the absorption tower (10), the absorption tower (10) being configured to absorb carbon dioxide contained in a gas to be processed into the absorbing solution, the stripping tower (20) being configured to strip the carbon dioxide from the absorbing solution. The operation method includes extracting from the stripping tower (20) the absorbing solution from which at least part of the carbon dioxide has been stripped, storing the absorbing solution extracted while heating the absorbing solution extracted to a temperature higher than a temperature of the absorbing solution flowing from the absorption tower (10) to the stripping tower (20), and supplying the absorbing solution stored to the heat exchanger (30) without passing through the stripping tower (20).

### Reference Signs List

1 Carbon dioxide recovery system
2 Control unit
10 Absorption tower
11 Rich solution tank unit
12 Lean solution supply unit
20 Stripping tower
21 Lean solution tank unit
22 Rich solution supply unit
30 Heat exchanger
40 Storage device
41 Buffer tank (tank)
42 Heater
43 Extraction valve
44 Supply pump
45 Supply valve
61 Reboiler
71 Lean solution pump
72 Lean solution cooler
73 Lean solution valve
81 Rich solution pump
83 Rich solution valve
91 Exhaust gas cooler
L1 Exhaust gas discharge line
L12 Rich solution line (forward line)
L21 Lean solution line (return line)
L41 Extraction line
L42 Supply line

## Claims

1. A carbon dioxide recovery system, comprising:
a heat exchanger configured to heat an absorbing solution flowing from an absorption tower to a stripping tower by using the absorbing solution flowing from the stripping tower to the absorption tower, the absorption tower being configured to absorb carbon dioxide contained in a gas to be processed into the absorbing solution, the stripping tower being configured to strip the carbon dioxide from the absorbing solution; and
a storage device configured to extract from the stripping tower the absorbing solution from which at least part of the carbon dioxide has been stripped, store the absorbing solution extracted while heating the absorbing solution extracted to a temperature higher than a temperature of the absorbing solution flowing from the absorption tower to the stripping tower, and supply the absorbing solution stored to the heat exchanger without passing through the stripping tower.

2. The carbon dioxide recovery system according to claim 1, wherein a temperature of the absorbing solution stored in the storage device is a temperature higher than a temperature of the absorbing solution flowing from the stripping tower to the heat exchanger or a temperature higher than a temperature of the absorbing solution stored in a bottom portion of the stripping tower.

3. The carbon dioxide recovery system according to claim 1 or 2,
wherein
the storage device includes
a tank configured to store the absorbing solution,
an extraction line configured to guide the absorbing solution from the stripping tower to the tank,
a supply line configured to guide the absorbing solution from the tank to the heat exchanger, and
a heater configured to heat the absorbing solution stored in the tank.

4. The carbon dioxide recovery system according to claim 3, comprising
a control unit, wherein
the storage device includes a valve provided at the extraction line, and
the control unit determines an opening degree of the valve on the basis of a liquid level of the absorbing solution stored in a lower portion of the stripping tower.

5. The carbon dioxide recovery system according to claim 3, wherein the storage device includes a pump provided at the supply line.

6. The carbon dioxide recovery system according to claim 5, comprising
a control unit, wherein
the control unit determines a rotational speed of the pump in accordance with a discharge amount of the gas to be processed.

7. The carbon dioxide recovery system according to claim 5, further comprising a control unit,
wherein the storage device includes a valve provided at the supply line, and
the control unit determines at least one of a rotational speed of the pump and an opening degree of the valve in accordance with a discharge amount of the gas to be processed.

8. The carbon dioxide recovery system according to claim 1 or 2, comprising:
a control unit;
a plurality of return lines configured to guide the absorbing solution to the absorption tower; and
a valve provided at each of the return lines, wherein
the control unit determines an opening degree of each valve in accordance with a total amount of the absorbing solution to be guided to the absorption tower.

9. The carbon dioxide recovery system according to claim 1 or 2, comprising:
a control unit;
a plurality of forward lines configured to guide the absorbing solution to the stripping tower; and
a valve provided at each of the forward lines, wherein
the control unit determines an opening degree of each valve in accordance with a total amount of the absorbing solution to be guided to the stripping tower.

10. The carbon dioxide recovery system according to claim 9, wherein the plurality of forward lines pass through the heat exchanger.

11. An operation method for a carbon dioxide recovery system comprising a heat exchanger configured to heat an absorbing solution flowing from an absorption tower to a stripping tower by using the absorbing solution flowing from the stripping tower to the absorption tower, the absorption tower being configured to absorb carbon dioxide contained in a gas to be processed into the absorbing solution, the stripping tower being configured to strip the carbon dioxide from the absorbing solution,
the operation method comprising:
extracting from the stripping tower the absorbing solution from which at least part of the carbon dioxide has been stripped;
storing the absorbing solution extracted while heating the absorbing solution extracted to a temperature higher than a temperature of the absorbing solution flowing from the absorption tower to the stripping tower; and
supplying the absorbing solution stored to the heat exchanger without passing through the stripping tower.
